# DEMANDE DE BREVET EUROPEEN

(11) **EP 1 447 166 A1**
(43) Date de publication de la demande: **18.08.2004**
(21) Numéro de dépôt: 03025889.1
(22) Date de dépôt: 12.11.2003
(51) Int. Cl.: B23K 20/10, F16J 15/08

(54) **Procédé et dispositif de liaison par soudage d'au moins deux feuilles métalliques et joints obtenus**

(30) Priorité: 17.02.2003 FR 0301869
(71) Demandeur: Carl Freudenberg KG, 69469 Weinheim (DE)
(72) Inventeur: Claveyrollas, Frédéric Daniel, 87140 Le Palais sur Vienne (FR); Sage, Loic Michel Pascal, 69469 Weinheim (FR)

(57) **Abrégé**

L'objet de l'invention est un procédé de liaison d'au moins deux feuilles (10,12) métalliques superposées en un empilement, l'une d'elles au moins portant au moins sur une face un revêtement (14,16) électriquement isolant, notamment pour la réalisation de joints multifeuilles, caractérisé en ce qu'il consiste à placer l'empilement de feuilles entre une enclume (18) et une sonotrode (22), à exercer une pression donnée sur cet empilement et à émettre au cours de cette mise en pression un train d'ultrasons en sorte de provoquer la fusion localisée du métal constituant lesdites feuilles, au droit de la sonotrode.

L'invention couvre aussi le joint plat ou le joint de culasse obtenu ainsi que l'utilisation d'ultrasons pour assurer des points de liaison d'un empilement de feuilles métalliques.

## Description

La présente invention concerne un procédé et un dispositif de liaison par soudage d'au moins deux feuilles métalliques.

La description qui va suivre est focalisée sur un exemple précis des joints plats mais de nombreuses autres applications peuvent être envisagées comme il sera indiqué plus avant et notamment les joints de culasse.

On connaît les joints métalliques comprenant plusieurs feuilles de métal de faible épaisseur, quelques dixièmes de millimètres à un ou deux millimètres pour donner un ordre d'idée. Ces feuilles métalliques sont découpées et superposées. Si nécessaire, on ménage des déformations de profil adapté pour réaliser des nervures en sorte de focaliser les efforts de compression et réaliser des barrières d'étanchéité, ceci suivant une cartographie sophistiquée.

Certains joints plats de façon générale, comme les joints de collecteur d'échappement, sont fabriqués à partir de plusieurs feuilles métalliques.

C'est ainsi aussi que sont réalisés les joints de culasse multifeuilles montés sur de nombreux moteurs à explosion de véhicules.

Dans ce cas, les joints de culasse comprennent une superposition de plusieurs feuilles de différentes natures, de différentes épaisseurs en fonction du type de moteur.

Il convient de maintenir les feuilles de cet empilement parfaitement positionnées et à cet effet, il convient de souder par points ces feuilles pour les lier les unes aux autres.

De façon connue, cette soudure par points est réalisée en utilisant l'énergie électrique en ménageant une différence de tension très importante entre deux électrodes, disposées de part et d'autre de l'empilement, ce qui provoque un arc électrique, une fusion localisée du métal des feuilles et donc la soudure.

Un problème se pose lorsque les feuilles métalliques sont revêtues d'un matériau isolant. En effet, pour contribuer à compenser les défauts engendrés par les mouvements relatifs de la culasse par rapport au bloc moteur sous l'effet des dilatations et pour assurer la micro-étanchéité, les feuilles sont enduites dans certains cas d'une couche mince d'un revêtement. Le matériau constituant ce revêtement est issu de la chimie du carbone sous forme de résine, d'élastomère avec des caractéristiques spécifiques concernant les coefficients de frottement, la dureté, les capacités d'étanchéité, les conditions de mise en oeuvre.

Le bisulfure de molybdène est un des revêtements couramment utilisés et son pouvoir isolant est tel que la soudure électrique par points devient impossible. Le revêtement agit comme un diélectrique.

Des solutions existent en recourant à des revêtements isolants concernant la matrice mais chargés de particules conductrices pour les rendre conducteurs. De tels revêtements permettent alors d'utiliser les techniques connues de soudure électrique par points. L'inconvénient est de nécessiter une composition particulière et d'introduire des particules généralement métalliques dans un matériau anti-friction, ce qui n'est pas non plus satisfaisant.

La répartition des particules doit être homogène en sorte de générer des soudures de qualité à chaque point prévu, de façon reproductible, ce qui impose d'autres contraintes.

Aussi la présente invention propose une alternative en recourant à un procédé de liaison de feuilles métalliques revêtues d'un matériau isolant qui ne nécessite pas de modifications de la composition de ce revêtement, qui est régulier et reproductible.

A cet effet, le procédé de liaison d'au moins deux feuilles métalliques superposées en un empilement, l'une d'elles au moins portant au moins sur une face un revêtement électriquement isolant, notamment pour la réalisation de joints multifeuilles, se caractérise en ce qu'il consiste à placer l'empilement de feuilles entre une enclume et une sonotrode, à exercer une pression donnée sur cet empilement et à émettre au cours de cette mise en pression un train d'ultrasons en sorte de provoquer la fusion localisée du métal constituant lesdites feuilles, au droit de la sonotrode.

Selon une autre caractéristique, la sonotrode dispose de moyens de manoeuvre permettant d'exercer une pression sur l'empilement et des moyens transducteurs permettant de générer un train d'ultrasons transmis par la sonotrode à l'empilement.

De façon préférentielle, un amplificateur est interposé entre les moyens transducteurs et la sonotrode.

L'invention couvre aussi le joint multifeuilles plat comprenant au moins un point de soudure entre les deux feuilles réalisé par une fusion localisée engendrée par un train d'ultrasons.

Plus particulièrement, l'invention couvre un joint de culasse comprenant au moins un point de soudure réalisés par une fusion localisée engendrée par un train d'ultrasons.

Ces points de soudure sont réalisés en périphérie des trous de cylindre et/ou en périphérie de l'empilement de feuilles.

L'invention porte aussi sur l'utilisation d'un train d'ultrasons pour assurer la liaison par points d'un empilement d'au moins deux feuilles métalliques dont une feuille au moins comprend sur au moins une face un revêtement isolant électriquement.

Le procédé est maintenant décrit en détail suivant un mode de réalisation particulier, non limitatif, en regard du dessin annexé, sur lequel les figures montrent :
- figure 1, une vue schématique du dispositif utilisé pour la mise en oeuvre dudit procédé,
- figure 2, une vue de dessus d'un joint de culasse avec localisation des points de liaison, et
- figure 3, une vue en coupe suivant la ligne 3-3 de la figure 2.

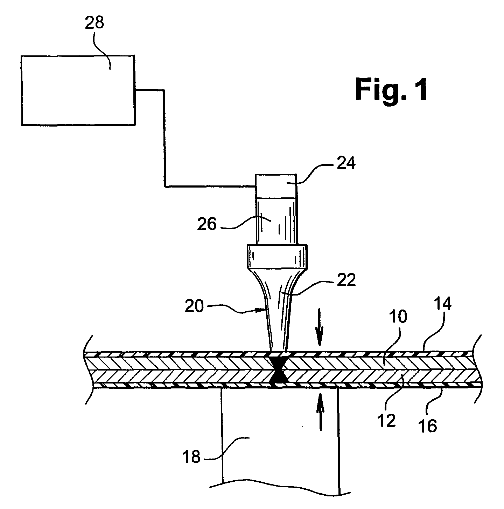

Sur la figure 1, on a représenté un joint plat comprenant dans l'exemple représenté, deux feuilles 10, 12 métalliques. Dans ce mode de réalisation, les feuilles sont en acier doux ou inoxydable, brut, aluminié, zingué ou nickelé ou en aluminium.

L'épaisseur est comprise entre 0,1 et 2,0 millimètres.

Ces feuilles sont revêtues chacune sur sa face extérieure, d'un revêtement 14, 16 d'un matériau électriquement isolant dont les rôles et fonctions peuvent être multiples. Ce revêtement peut être du bisulfure de molybdène, de l'éthylène propylène diène monomère EPDM, du nitrile butadiène rubber NBR, du silicone, une laque ou un vernis.

Ce revêtement présente une épaisseur de 10 à 1000 µm.

Les deux feuilles sont placées entre une enclume 18, de forte masse et un outil 20. Les échelles des différents matériels représentés ne sont pas respectées en sorte de montrer les détails des feuilles.

Cette enclume est de surface suffisante pour recevoir les feuilles et supporter la pression exercée par l'outil comme il sera expliqué ultérieurement. Sa masse importante permet de dissiper l'énergie transmise à travers l'outil 20.

Cet outil 20 est une sonotrode 22 de profil adapté en fonction des points de soudure à réaliser. Cette sonotrode présente une résistance mécanique permettant d'exercer une pression sur les deux feuilles, l'enclume jouant son rôle de reprise des efforts.

Cette sonotrode est associée de façon intime à un transducteur 24 producteur d'ultrasons.

De façon à permettre de concentrer et de focaliser les ondes émises pour que l'amplitude maximale se situe à l'interface des feuilles métalliques, il est prévu de façon connue un amplificateur 26 des ondes émises par le transducteur. Cet amplificateur est interposé entre le transducteur et la sonotrode.

Ce transducteur 24 est lui-même alimenté par un générateur 28 qui crée des oscillations électriques initiales.

La fréquence de travail est comprise entre 15 KHz et 3 MHz.

Le procédé consiste à placer les feuilles entre la sonotrode et l'enclume et à générer des ultrasons.

De façon surprenante, on constate que les ultrasons traversent le revêtement qui est isolant électriquement mais qui présente aussi des caractéristiques d'amortissement.

Néanmoins, on constate que les ultrasons provoquent la friction des deux faces métalliques en vis-à-vis et sous la pression simultanément exercée, les deux surfaces fondent ponctuellement, au droit de la sonotrode, ce qui conduit à la liaison par soudure des deux feuilles en vis.

La durée pendant laquelle est exercée la pression et pendant laquelle le train d'ultrasons est émis, reste fonction des matériaux et reste à la portée de l'homme de l'art.

De même, la position du point de soudure est fonction de la pièce et des besoins.

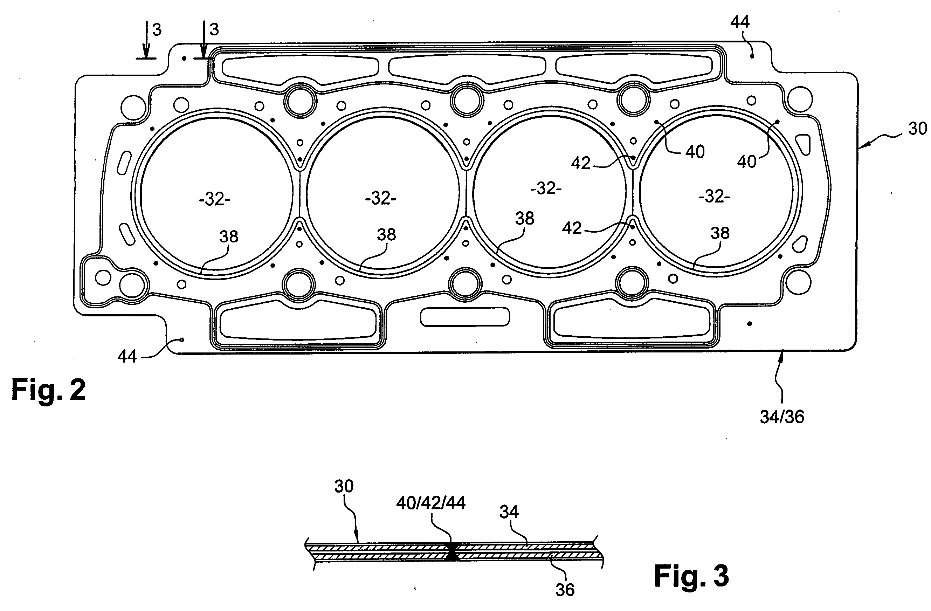

Sur la figure 2, on a représenté un joint de culasse 30 de moteur quatre cylindres donc comprenant quatre trous 32 de cylindre avec un empilement de deux feuilles 34, 36.

Chaque trou de cylindre porte en périphérie une sertissure 38.

Les points 40 de liaison obtenus par soudure aux ultrasons sont disposés en périphérie des trous de cylindre et certains 42 à proximité des zones intercylindres.

D'autres points 44 sont disposés en périphérie de l'empilement pour assurer un maintien général.

Sur la coupe 3-3, on peut retrouver la structure du point de liaison obtenu par fusion localisée au droit de la sonotrode.

On remarque lors de cette opération que les feuilles en vis-à-vis et leurs revêtements ne subissent pas de dégradation en dehors de la surface de pression de l'outil

On peut citer de nombreuses applications en dehors des joints et notamment le cas de deux pièces métalliques qui doivent être liées l'une à l'autre après peinture car celle-ci joue le rôle de diélectrique.

De ce fait, la peinture intervient souvent après montage mais en nécessitant des opérations plus complexes, notamment de masquage de certaines parties.

Une fois déterminés les paramètres en fonction des épaisseurs et de la nature des matériaux des feuilles et de leurs revêtements, on constate que le procédé est reproductible, ce qui convient à des applications industrielles, notamment avec un suivi de contrôle qualité important.

Dans le cas des joints de culasse, la qualité est d'autant plus importante que la déficience d'un tel joint peut engendrer des dégradations importantes pour le moteur d'un véhicule et d'un coût important.

Dans les exemples présentés, le revêtement tel que représenté est présent sur l'une des deux faces de chaque feuille, mais on peut imaginer trouver des feuilles avec deux faces revêtues.

On constate que la soudure est néanmoins obtenue grâce à ce procédé de soudage utilisant des ultrasons.

Un autre avantage de cette technique est l'aspect sécuritaire. En effet, en ambiance solvant ou résine, les ultrasons ne provoquent pas de courts-circuits, d'étincelles susceptibles de provoquer des incendies. Quant aux personnels en charge des dispositifs, ils ne sont soumis à aucun danger de flash lumineux ou de risques liés à la manipulation de fortes tensions électriques.

Enfin, le dispositif peut aisément être introduit au coeur d'une chaîne de fabrication.

## Revendications

1. Procédé de liaison d'au moins deux feuilles (10,12) métalliques superposées en un empilement, l'une d'elles au moins portant au moins sur une face un revêtement (14,16) électriquement isolant, notamment pour la réalisation de joints multifeuilles, **caractérisé en ce qu'**il consiste à placer l'empilement de feuilles entre une enclume (18) et une sonotrode (22), à exercer une pression donnée sur cet empilement et à émettre au cours de cette mise en pression un train d'ultrasons en sorte de provoquer la fusion localisée du métal constituant lesdites feuilles, au droit de la sonotrode.

2. Dispositif de liaison d'au moins deux feuilles (10,12) métalliques superposées en un empilement, l'une d'elles au moins portant au moins sur une face un revêtement (14,16) électriquement isolant, notamment pour la réalisation de joints multifeuilles, **caractérisé en ce qu'**il comprend au moins une enclume (18) supportant ledit empilement, une sonotrode (22), l'enclume et/ou la sonotrode ayant des moyens de manoeuvre permettant d'exercer une pression sur l'empilement et des moyens transducteurs (24) permettant de générer un train d'ultrasons transmis par la sonotrode à l'empilement.

3. Dispositif de liaison d'au moins deux feuilles selon la revendication 2, **caractérisé en ce qu'**il comprend un amplificateur (26) interposé entre les moyens transducteurs (24) et la sonotrode (22).

4. Joint multifeuilles plat comprenant un empilement d'au moins deux feuilles dont une feuille au moins comprend sur au moins une face un revêtement isolant électriquement, **caractérisé en ce qu'**il comprend au moins un point (40,42,44) de soudure entre les deux feuilles (34,36) réalisé par une fusion localisée engendrée par un train d'ultrasons.

5. Joint de culasse (30) comprenant un empilement d'au moins deux feuilles (34,36) métalliques dont une feuille au moins comprend sur au moins une face un revêtement isolant électriquement, **caractérisé en ce qu'**il comprend au moins un point (40,42,44) de soudure réalisés par une fusion localisée engendrée par un train d'ultrasons.

6. Joint de culasse selon la revendication 5, **caractérisé en ce que** le au moins un point (40,42) de soudure est réalisé en périphérie des trous (32) de cylindre.

7. Joint de culasse selon la revendication 5 ou 6, **caractérisé en ce que** le au moins un point (44) de soudure est réalisé en périphérie de l'empilement de feuilles.

8. Utilisation d'un train d'ultrasons pour assurer la liaison par points d'un empilement d'au moins deux feuilles métalliques dont une feuille au moins comprend sur au moins une face un revêtement isolant électriquement.
